# DEMANDE DE BREVET EUROPEEN

(11) **EP 1 178 629 A1**
(43) Date de publication de la demande: **06.02.2002**
(21) Numéro de dépôt: 01460032.4
(22) Date de dépôt: 11.05.2001
(51) Int. Cl.: H04L 12/26, H04L 12/24

(54) **Procédé d'optimisation d'une interface usager d'instrument de test, instrument de test et programme informatique correspondants**

(30) Priorité: 05.06.2000 FR 0007172
(71) Demandeur: Wandel & Goltermann CTS, 35517 Cesson Sevigne (FR)
(72) Inventeur: Pinel, Bertrand, 35740 PACE (FR); Denigot, Patrice, 35220 Chateaubourg (FR)
(74) Mandataire: Vidon, Patrice

(57) **Abrégé**

L'invention concerne un procédé d'optimisation d'une interface usager (30, 31) d'un instrument de test, mettant en oeuvre un ensemble d'objets de test, présentant chacun au moins un attribut, ladite interface usager permettant d'accéder à au moins certains desdits objets de test.

Selon l'invention, un tel procédé d'optimisation comprend, avant la mise en service dudit instrument de test, au moins une étape de configuration (32), consistant à modifier la valeur d'au moins un attribut de présentation d'au moins un objet de test, en fonction d'au moins un critère technique prédéterminé, de façon à définir une configuration donnée de ladite interface usager.

## Description

Le domaine de l'invention est celui des instruments de test et/ou de mesure, et notamment des instruments de test destinés au domaine des télécommunications. Plus précisément, l'invention concerne un procédé d'optimisation d'une interface usager d'un instrument de test.

Par souci de simplification, ici et dans toute la suite du document, on désigne par instrument de test, ou testeur, tout instrument de test et/ou de mesure.

L'invention s'applique notamment, mais non exclusivement, au domaine des réseaux de communication, et plus particulièrement au domaine des réseaux numériques.

Actuellement, les réseaux numériques permettent l'interconnexion de terminaux aussi divers que des téléphones, des télécopieurs, des ordinateurs, des terminaux de paiement, etc. De tels réseaux numériques sont réalisés à partir de différents supports physiques, comme les fibres optiques, les câbles coaxiaux ou la paire téléphonique. Par ailleurs, diverses topologies de réseaux numériques sont couramment utilisées, telles que la topologie Ethernet, la topologie Token - Ring, ou les boucles locales par exemple.

À ce jour, les réseaux numériques mettent en oeuvre des protocoles, qui peuvent être classés en deux catégories principales:
- les protocoles publics, qui permettent de fournir un mécanisme de signalisation entre le réseau considéré et un usager de ce réseau. C'est le cas par exemple du réseau RNIS (Réseau Numérique à Intégration de Service) ;
- les protocoles privés, qui permettent d'interconnecter une pluralité d'équipements, dans le cadre, par exemple, d'un autocommutateur ou d'une régie téléphonique. Les protocoles privés peuvent être des protocoles de portée mondiale, spécifiés par un organisme de standardisation, ou des protocoles de type propriétaire, développés par un constructeur d'équipement de réseau.

Les réseaux de communication représentent des enjeux de plus en plus importants, et constituent notamment le nerf des entreprises. Par conséquent, les opérateurs de réseaux doivent faire face à une demande croissante en terme d'accès aux réseaux de communication.

Il devient donc capital d'assurer une mise en service complète d'un réseau de communication, ou d'un équipement de communication relié à un tel réseau, en un temps de plus en plus court.

Il est également particulièrement important d'effectuer les diverses opérations de maintenance nécessaires au bon fonctionnement d'un réseau de communication, de manière très rapide, afin notamment de minimiser la durée des interruptions de service, et donc de garantir un niveau de service optimal aux différents usagers du réseau de communication.

Or, un problème principal auquel sont confrontés la plupart des opérateurs de réseaux de communication est le niveau de connaissance technique et/ou d'expérience sur le terrain, de plus en plus réduit, du personnel qu'il emploie.

La complexité des réseaux, et notamment des réseaux numériques, ainsi que des instruments de test nécessaires à la mise en service ou aux travaux de maintenance de ces réseaux, rend impérative la formation, souvent longue et coûteuse, des techniciens intervenant sur l'ensemble de ces opérations.

Un autre problème auquel sont confrontés les opérateurs des réseaux de communication est de faire respecter, par les techniciens intervenant sur le réseau, une procédure de test prédéterminée, au cours des différentes opérations de mise en service et de maintenance.

Actuellement, les fabricants d'instruments de test, et notamment de testeurs portatifs, ont pour objectif principal de fournir aux opérateurs et aux techniciens des réseaux de communication, des outils de plus en plus performants. La qualité des'instruments de test, aujourd'hui disponibles sur le marché, se mesure donc en nombre d'applications de test et de fonctions de mesure proposées à l'utilisateur, mais ne prend pas en compte un critère de simplicité d'utilisation.

On a cependant vu apparaître quelques perfectionnements des instruments de test, visant à faciliter leur utilisation par le technicien du réseau. Notamment, on peut désormais accéder rapidement aux applications de test principales, par l'intermédiaire d'icônes, sur lesquelles l'utilisateur n'a qu'à cliquer. Il n'est donc plus nécessaire, pour accéder à une application donnée, de parcourir un ensemble de menus proposés par le testeur.

Il est également possible, en fonctionnement, d'utiliser des profils prédéfinis pour certaines applications de test ou pour certaines fonctions de mesure, qui sont regroupés dans une bibliothèque de l'instrument de test. Un profil permet de sauvegarder les valeurs d'un ensemble de paramètres de l'application ou de la fonction utilisée. On affecte un nom à chaque profil, et l'utilisateur peut ensuite, en cours d'utilisation de l'instrument de test, charger l'un quelconque des profils disponibles dans la bibliothèque, afin que le test et/ou la mesure qu'il souhaite effectuer prenne en compte les valeurs des paramètres spécifiées dans le profil chargé.

Cependant, un inconvénient de cette technique de l'art antérieur est que le nombre de profils disponibles pour l'utilisateur est généralement très limité.

Un autre inconvénient de cette technique de l'art antérieur est que les profils disponibles ne s'appliquent que partiellement (généralement à la configuration de l'application principale de l'instrument de test).

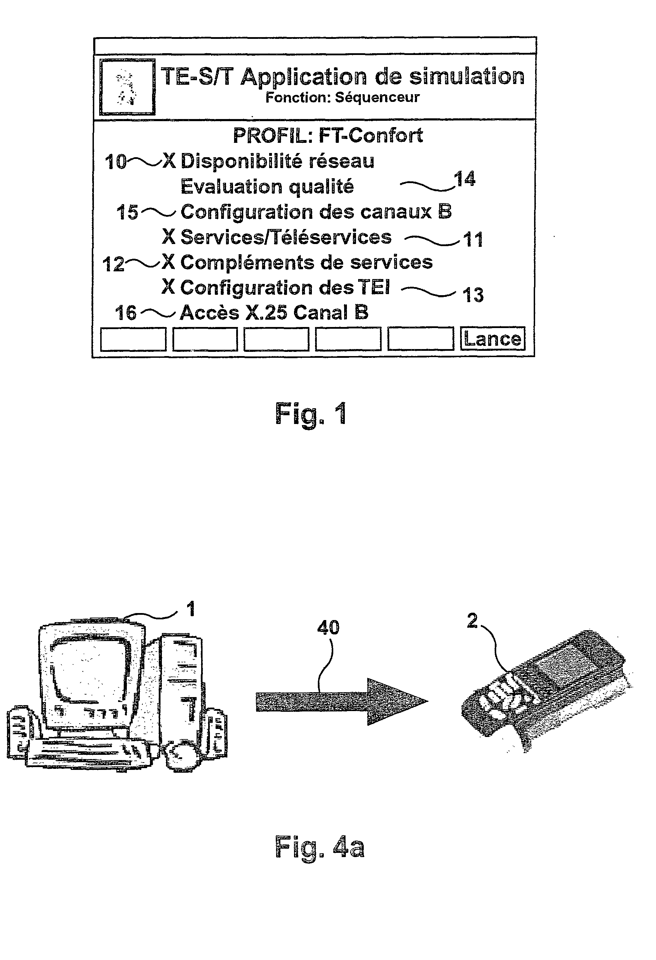

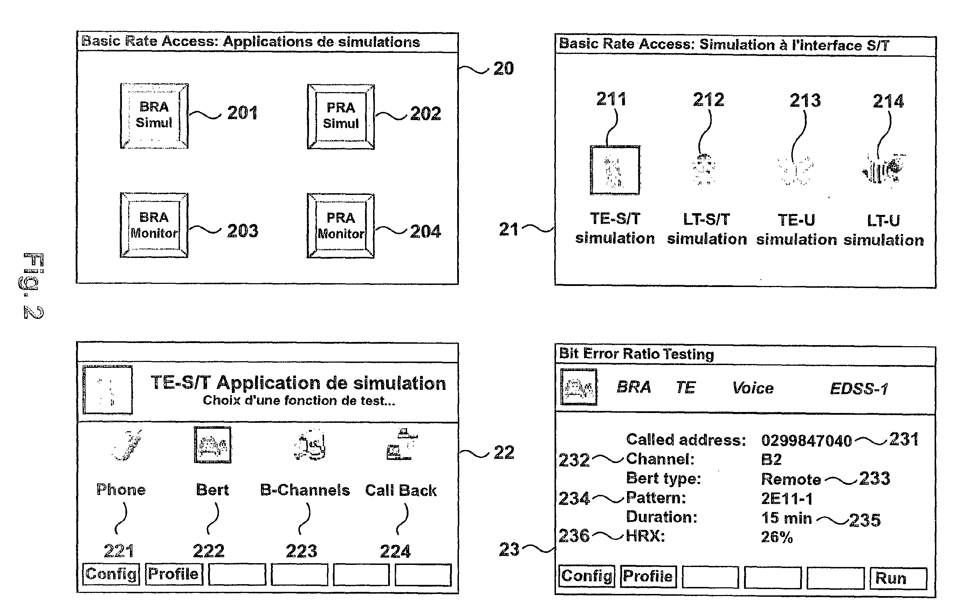

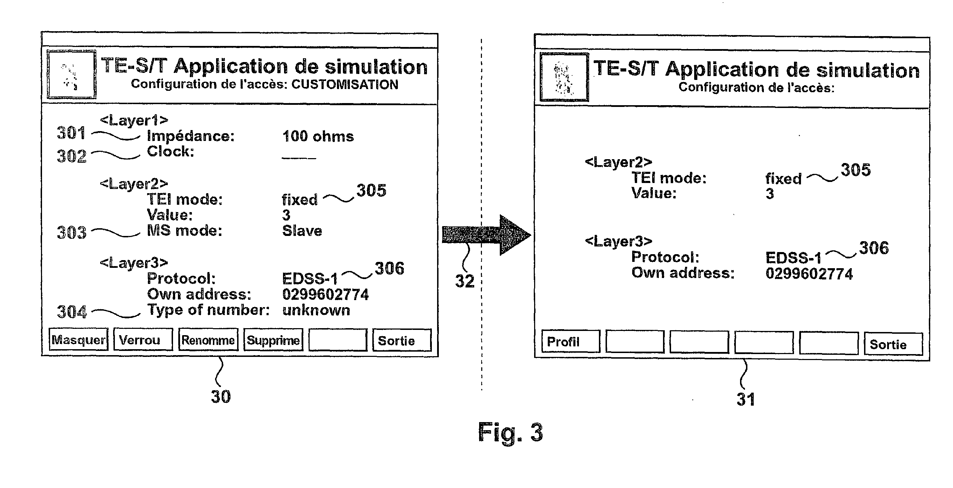

On a également envisagé, sur les testeurs portatifs, la possibilité d'enchaîner une séquence ou une suite de tests élémentaires. En cours d'utilisation de l'instrument de test, le technicien peut choisir un ensemble de fonctions de test au sein d'une application, qui seront enchaînées sans que les résultats de chaque fonction élémentaire ne soient analysés. Un exemple de séquenceur de test est présenté en relation avec la figure 1. Sur cet exemple, l'utilisateur a choisi de tester la disponibilité du réseau 10, les services/téléservices 11, les compléments de services 12, et la configuration des TEI 13. Il ne souhaite tester ni l'évaluation de la qualité 14, ni la configuration des canaux B 15, ni l'accès X.25 au canal B 16. Les fonctions de test élémentaires référencées 10, 11, 12 et 13 seront donc enchaînées au lancement de la séquence de tests.

Un inconvénient de cette technique de l'art antérieur est qu'il n'est pas possible de définir et de sauvegarder plusieurs séquences de test avec des paramètres de test différents, dans l'instrument de test. L'utilisateur est donc contraint à effectuer une nouvelle programmation du testeur portatif, à chaque fois que l'environnement, dans lequel il souhaite effectuer un test donné, est modifié (par exemple, modification du protocole d'échange des données, ou de l'adresse de destination).

On a encore envisagé de permettre aux utilisateurs des instruments de test d'accéder à une aide en ligne, afin de leur éviter d'avoir recours, en cas de difficulté d'utilisation, à une personne techniquement plus expérimentée, ou plus familière avec l'utilisation du testeur considéré.

Un inconvénient de cette technique de l'art antérieur est qu'une telle aide en ligne est généralement très sommaire.

Les instruments de test existant à ce jour sont donc caractérisés par un grand nombre d'applications de test différentes, un grand nombre de fonctions de mesure, ainsi qu'un très grand nombre de paramètres de test.

Par conséquent, un inconvénient de tels instruments de test est qu'un utilisateur peut sélectionner une application donnée, afin d'y rechercher une fonction de test particulière, alors que cette application ne peut lui être utile, pour diverses raisons techniques. (Par exemple, une telle application ne peut être mise en oeuvre dans le cadre du réseau qu'il souhaite tester, et est réservée à un réseau de communication public étranger.) L'utilisateur peut donc perdre du temps au cours de son intervention sur un réseau, en faisant inutilement défiler les fonctions de l'application qu'il a sélectionnée.

Un autre inconvénient de tels instruments de test est qu'un utilisateur, peu familier du testeur considéré, ou peu expérimenté techniquement, peut modifier par mégarde ou inadvertance un ou plusieurs paramètres de test, proposés par le testeur. On peut ensuite envisager qu'un manque de connaissance technique, ou qu'une mauvaise connaissance du testeur utilisé, empêche l'utilisateur de rétablir la valeur initiale des paramètres, malencontreusement modifiés. L'utilisateur est alors contraint d'avoir recours à une réinitialisation logicielle complète de l'instrument de test, ce qui implique une perte de temps importante au cours des opérations de mise en service et/ou de maintenance entreprises.

De tels instruments de test ont encore pour inconvénient d'offrir un nombre important de paramètres de test sur un écran de taille généralement réduite, notamment pour les testeurs portatifs. Il n'est donc généralement pas possible d'afficher tous les paramètres d'une fonction de mesure sur l'écran du testeur, ce qui contraint l'utilisateur à les faire défiler progressivement, de manière à localiser le paramètre qu'il recherche.

Un inconvénient de tels instruments de test est encore que les techniciens des opérations de mise en service et de maintenance doivent être formés à leur utilisation, ce qui est généralement coûteux.

L'invention a notamment pour objectif de pallier ces inconvénients de l'art antérieur.

Plus précisément, un objectif de l'invention est de fournir un instrument de test qui soit simple d'utilisation et ne nécessite pas de formation coûteuse de ses utilisateurs.

Un autre objectif de l'invention est de mettre en oeuvre un instrument de test permettant aux techniciens qui l'utilisent de travailler de manière rapide et efficace.

L'invention a encore pour objectif de fournir un instrument de test permettant de contraindre un utilisateur à respecter une procédure de test prédéterminée.

Un autre objectif de l'invention est de fournir un instrument de test adapté aux activités de mise en service et de maintenance dans le cadre des réseaux de communication, et notamment des réseaux numériques.

L'invention a également pour objectif de mettre en oeuvre un instrument de test adaptable à un grand nombre d'environnements de test différents, sans qu'il soit nécessaire de recourir au développement de différentes versions du logiciel installé dans l'instrument de test.

Un autre objectif de l'invention est de fournir un instrument de test présentant un grand nombre d'applications de test, de fonctions de mesure et de paramètres de test.

Encore un autre objectif de l'invention est de mettre en oeuvre un instrument de test pouvant également proposer à l'utilisateur d'accéder à un ou plusieurs profils de test et/ou à un séquenceur de test, en cours d'utilisation, selon une technique classique de l'art antérieur.

L'invention a encore pour objectif de fournir un instrument de test dans lequel l'utilisateur ne risque pas de modifier par inadvertance les valeurs de certains paramètres de test.

L'invention a également pour objectif de mettre en oeuvre un instrument de test, dans lequel l'utilisateur n'a pas besoin de parcourir une arborescence complexe d'applications, de fonctions et de paramètres de mesure avant d'effectuer une opération de test.

Un autre objectif de l'invention est de fournir un instrument de test adaptable à un grand nombre de méthodologies de test différentes, sans qu'il soit nécessaire de recourir au développement de différentes versions du logiciel installé dans l'instrument de test.

Ces objectifs, ainsi que d'autres qui apparaîtront par la suite sont atteints selon l'invention, à l'aide d'un procédé d'optimisation d'une interface usager d'un instrument de test, mettant en oeuvre un ensemble d'objets de test, présentant chacun au moins un attribut, ladite interface usager permettant d'accéder à au moins certains desdits objets de test.

Selon l'invention, un tel procédé comprend, avant la mise en service dudit instrument de test, au moins une étape de configuration, consistant à modifier la valeur d'au moins un attribut de présentation d'au moins un objet de test, en fonction d'au moins un critère technique prédéterminé, de façon à définir une configuration donnée de ladite interface usager.

Ainsi, l'invention repose sur une approche tout à fait nouvelle et inventive de perfectionnement d'un instrument de test. En effet, l'invention repose notamment sur l'optimisation d'une interface usager d'un instrument de test, obtenue par configuration de l'interface, avant la mise en service de l'instrument de test.

À ce jour, les différents outils proposés à un technicien pour faciliter l'utilisation d'un instrument de test, tels que les profils ou les séquenceurs de test par exemple, sont mis en oeuvre au cours de l'utilisation du testeur, c'est-à-dire pendant les opérations de mise en service ou de maintenance liées au réseau de communication considéré. L'invention repose quant à elle sur une nouvelle approche, consistant à effectuer une configuration de l'interface usager de l'instrument de test, avant sa mise en service.

De cette manière, l'instrument de test peut, avant sa mise en service, être adapté à la méthodologie de test de l'utilisateur, ainsi qu'à l'environnement réseau considéré.

Selon une caractéristique avantageuse de l'invention, ledit procédé comprend, à l'issue de ladite au moins une étape de configuration, une étape supplémentaire de stockage de chaque configuration donnée dans un fichier de configuration distinct, et on accède sélectivement à l'un desdits au moins un fichier de configuration, avant ladite mise en service dudit instrument de test.

L'utilisateur de l'instrument de test peut ainsi choisir, avant de procéder aux opérations de mise en service ou de maintenance, l'une des configurations stockées dans un fichier de configuration, de manière à adapter l'interface de l'instrument de test aux opérations qu'il s'apprête à effectuer.

On peut aussi envisager qu'au sein d'une organisation, disposant d'une pluralité d'instruments de test, on distingue plusieurs groupes d'utilisateurs. Par exemple, un premier groupe d'utilisateurs est généralement chargé des opérations de mise en service, liées aux réseaux de communication, et un second groupe d'utilisateurs est chargé des opérations de maintenance. On peut alors imaginer que ces deux groupes d'utilisateurs partagent les mêmes instruments de test, et que, avant la mise en service d'un testeur, un utilisateur du premier groupe accède au fichier de configuration, permettant d'adapter l'interface de l'instrument de test aux opérations de mise en service qu'il s'apprête à effectuer. Si, par la suite, un utilisateur du second groupe souhaite utiliser le même instrument de test, il accède au fichier de configuration, permettant d'adapter l'interface de l'instrument de test aux opérations de maintenance qu'il souhaite entreprendre. On peut ainsi disposer d'un instrument de test unique, mais néanmoins adapté, pour chaque utilisateur, à l'environnement réseau dans lequel il évolue, et à la méthodologie de test qu'il emploie.

Selon un premier mode de réalisation avantageux de l'invention, ladite au moins une étape de configuration est effectuée dans ledit instrument de test.

Une application spécifique embarquée dans l'instrument de test est alors mise en oeuvre au cours de l'étape de configuration.

Avantageusement, ladite au moins une étape de stockage est effectuée dans ledit instrument de test.

Les fichiers de configuration sont alors stockés dans une zone mémoire spécifique de l'instrument de test, et l'utilisateur peut avoir directement accès au fichier de configuration dont il a besoin, depuis l'instrument de test, au moment de sa mise en service.

Selon une variante avantageuse de l'invention, un tel procédé comprend, en outre, une étape de transfert de ladite au moins une configuration, dudit instrument de test vers un terminal prédéterminé, et ladite au moins une étape de stockage est effectuée dans ledit instrument de test et/ou dans ledit terminal prédéterminé.

Par exemple, la configuration de l'interface usager, obtenue au cours de l'étape de configuration, est transférée vers un ordinateur personnel (en anglais PC "Personal Computer") ou tout autre terminal adapté. Elle peut alors faire l'objet de traitements spécifiques, au sein de ce terminal, et par exemple y être archivée. Une telle étape de transfert peut être effectuée grâce à une application spécifique présente dans le terminal de destination.

Selon un deuxième mode de réalisation avantageux de l'invention, ladite au moins une étape de configuration est effectuée dans un terminal prédéterminé, ledit procédé comprend, en outre, une étape de transfert de ladite au moins une configuration, dudit terminal prédéterminé vers ledit instrument de test, et ladite au moins une étape de stockage est effectuée dans ledit instrument de test et/ou dans ledit terminal prédéterminé.

Une mode de réalisation préférentiel de l'invention peut ainsi consister à définir la configuration de l'interface usager d'un instrument de test sur un terminal adapté, puis à transférer la configuration obtenue vers l'instrument de test, avant sa mise en service.

En effet, une personne expérimentée et qualifiée en matière d'instruments de test peut alors effectuer une étape de configuration générique sur le terminal, puis transférer la configuration ainsi obtenue vers une pluralité d'instruments de test. L'étape de configuration ne doit alors être mise en oeuvre qu'une fois, mais permet, par le biais de multiples étapes de transfert, de configurer l'interface usager d'un grand nombre de testeurs.

On peut aussi envisager qu'une configuration soit définie sur un instrument de test donné, puis transférée vers un terminal adapté, avant d'être à nouveau transférée vers une pluralité d'instruments de test. Ainsi, si un utilisateur a consacré du temps à la mise en oeuvre d'une étape de configuration, il peut, par le biais de transferts vers un terminal adapté, puis vers d'autres instruments de test, en faire bénéficier une pluralité d'autres utilisateurs.

De façon avantageuse, ladite étape de configuration permet, pour au moins un objet de test, de modifier la valeur d'un premier attribut de présentation, appelé attribut d'étiquette, permettant d'identifier ledit au moins un objet de test au sein de ladite interface usager.

Un tel attribut d'étiquette peut être le nom donné à l'objet de test, ou l'icône qui permet de l'identifier sur un écran de l'instrument de test, ou tout autre attribut permettant à un utilisateur d'identifier l'objet au sein de l'interface usager (par exemple, un ensemble de diodes électroluminescentes de couleur, un signal sonore, etc.). On peut ainsi modifier le nom de l'objet, de manière à le rendre plus explicite pour l'utilisateur, par exemple en employant un terme plus courant et/ou plus familier. On peut aussi changer l'icône représentative de l'objet de test, de façon, par exemple, à ce qu'elle se distingue davantage des autres icônes présentées au sein de l'interface usager.

Avantageusement, ladite étape de configuration permet, pour au moins un objet de test, de modifier la valeur d'un deuxième attribut de présentation, appelé attribut de masquage, pouvant prendre une première valeur « présenté » ou une seconde valeur « masqué », permettant respectivement de sélectionner la présentation ou le masquage dudit attribut d'étiquette au sein de ladite interface usager.

En effet, on peut désirer que les attributs d'étiquette de certains objets de test n'apparaissent pas au sein de l'interface usager, dans un souci de simplification de l'interface, par exemple.

On peut alors choisir de ne pas afficher certaines icônes, ou certains titres, notamment si l'on sait que les objets de test correspondant ne sont pas utiles au technicien en charge des opérations de maintenance et/ou de mise en service considérées. On évite ainsi que l'utilisateur de l'instrument de test ne perde du temps à faire défiler une pluralité de menus présentant un grand nombre d'objets de test, alors que seuls certains d'entre eux lui sont utiles, au cours de ses interventions sur un réseau de communications donné.

On peut aussi choisir de ne pas présenter certains objets de test au sein de l'interface usager, de manière à éviter que l'utilisateur de l'instrument de test considéré n'en modifie les attributs par inadvertance.

De manière avantageuse, ladite étape de configuration permet, pour au moins un objet de test, de modifier la valeur d'un troisième attribut de présentation, appelé attribut de position, permettant de sélectionner la position de présentation dudit attribut d'étiquette au sein de ladite interface usager, si ledit attribut de masquage a ladite première valeur « présenté ».

Dans le cas d'un affichage sur écran, on peut ainsi choisir de présenter l'attribut d'étiquette d'un objet de test donné en une position particulière de l'écran, par exemple de manière à ce que cet attribut d'étiquette soit particulièrement bien visible pour l'utilisateur, si l'on sait que cet objet de test est très souvent utilisé.

Si certains objets de test sont présentés sous forme de liste, au sein de l'interface usager, on peut aussi choisir, par exemple, de placer en fin de liste un objet de test qui est rarement utilisé par un technicien en charge d'opérations de maintenance et/ou de mise en service.

Selon une première caractéristique avantageuse de l'invention, au moins certains desdits objets de test sont des applications de test.

Selon une deuxième caractéristique avantageuse de l'invention, au moins certains desdits objets de test sont des fonctions de test.

Une application donnée regroupe généralement plusieurs fonctions de test.

Selon une troisième caractéristique avantageuse de l'invention, au moins certains desdits objets de test sont des paramètres de fonction de test.

Selon une technique avantageuse de l'invention, pour un objet de test donné qui est un paramètre de fonction de test, ladite étape de configuration permet en outre de modifier la valeur d'un attribut de valeur.

Ainsi, si l'on considère un paramètre de fonction de test permettant de déterminer la durée de l'opération de test effectuée par un technicien, la modification de la valeur de son attribut de valeur permet de réduire ou d'augmenter le temps de test.

Avantageusement, ladite étape de configuration permet en outre, pour au moins un objet de test donné qui est un paramètre de fonction de test, de modifier la valeur d'un quatrième attribut de présentation, appelé attribut de verrouillage, pouvant prendre un premier état "verrouillé", dans lequel la valeur d'un attribut de valeur est fixée, et un second état "non verrouillé", dans lequel la valeur d'un attribut de valeur est modifiable.

De manière préférentielle, ledit instrument de test est destiné à être utilisé pour tester des réseaux de transmission numériques.

L'invention concerne également un instrument de test, mettant en oeuvre un ensemble d'objets de test, présentant chacun au moins un attribut, une interface usager dudit instrument permettant d'accéder à au moins certains desdits objets de test.

Selon l'invention, un tel instrument de test comprend des moyens de configuration consistant à modifier, avant la mise en service dudit instrument de test, la valeur d'au moins un attribut de présentation d'au moins un objet de test, en fonction d'au moins un critère technique prédéterminé, de façon à définir une configuration donnée de ladite interface usager.

L'invention concerne encore un programme informatique comprenant des séquences d'instructions adaptées à la mise en oeuvre d'un procédé d'optimisation d'une interface usager d'un instrument de test selon l'une quelconque des revendications 1 à 15.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, décrite précédemment, présente un exemple de séquenceur de test;
- la figure 2 illustre différents objets de test dont la valeur d'attributs de présentation peut être modifiée au cours de l'étape de configuration selon l'invention ;
- la figure 3 présente un exemple de mode de réalisation d'une étape de configuration d'une interface usager, mettant en oeuvre des objets de test illustrés en figure 2 ;
- les figures 4a, 4b et 4c illustrent différents types de terminaux sur lesquels l'étape de configuration, présentée en figure 3, peut être mise en oeuvre, et décrivent des exemples de modes de réalisation de l'étape de transfert.

Le principe général de l'invention repose sur la configuration, avant la mise en service d'un instrument de test, de son interface usager, afin de l'adapter à l'environnement réseau et à la méthodologie de test de l'utilisateur.

On présente, en relation avec la figure 2, différents objets de test, dont la valeur des attributs de présentation peut être modifiée, au cours d'une étape de configuration de l'interface usager d'un instrument de test selon l'invention.

On considère, par exemple, un testeur portatif pour réseaux numériques RNIS, doté d'un écran d'affichage.

Quatre ensembles d'objets de test sont présentés à l'utilisateur sur l'écran du testeur.

L'ensemble référencé 20 est un ensemble de quatre groupes d'applications. Un premier groupe d'applications 201 s'intitule "BRA Simul", un deuxième groupe d'applications 202 s'intitule "PRA Simul", un troisième groupe d'applications 203 porte le titre "BRA Monitor", et un quatrième groupe d'applications 204 est le groupe "PRA Monitor". Les groupes d'applications 201, 202, 203 et 204 ne peuvent pas faire l'objet d'une étape de configuration, c'est-à-dire qu'on ne peut pas modifier la valeur de leurs attributs de présentation, selon l'invention.

Au sein de l'ensemble 20 des groupes d'applications, l'utilisateur sélectionne, par exemple, le groupe d'applications 201 "BRA Simul". L'ensemble 21 des applications du groupe référencé 201 est alors présenté sur l'écran de l'instrument de test. Par exemple, quatre icônes, référencées 211 à 214, accompagnées chacune d'une légende, constituent les attributs d'étiquette de chacune des quatre applications accessibles par l'utilisateur.

L'icône référencée 211 correspond à l'application de test "TE-S/T simulation", l'icône référencée 212 est un attribut d'étiquette de l'application de test "LT-S/T simulation", les icônes référencées 213 et 214 sont respectivement les icônes des applications "TE-U simulation" et "LT-U simulation".

La valeur des attributs de présentation des applications de test 211 à 214 peut être modifiée, au cours d'une étape de configuration, avant la mise en service de l'instrument de test. Par exemple, on peut choisir de n'afficher ni l'icône référencée 213, ni la légende correspondante, si l'on sait que l'application "TE-U simulation" n'est pas utile au technicien utilisant l'instrument de test considéré. On peut aussi choisir d'afficher l'icône référencée 214 et la légende correspondante à la place de l'icône référencée 211, si l'on sait que l'application correspondante est l'application à laquelle l'utilisateur de l'instrument de test a le plus fréquemment recours.

L'utilisateur sélectionne alors l'application de test référencée 211 (qui apparaît, par exemple, encadrée sur la figure 2), et les fonctions de test 22 correspondantes s'affichent à l'écran.

Chacune des fonctions de test 221 à 224 est représentée à l'aide d'une icône et d'une légende. Ainsi, la fonction de test référencée 221 correspond à la fonction de test "Phone", la fonction de test référencée 222 s'intitule "Bert", et les fonctions de test 223 et 224 correspondent aux fonctions "B-channels" et "Call back". Selon une technique similaire à celle évoquée précédemment pour les applications 21, la valeur de certains attributs de présentation des fonctions de test 22 peut être modifiée au cours d'une étape de configuration. Par exemple, on peut choisir de modifier l'icône (c'est-à-dire un attribut d'étiquette) représentative de la fonction de test référencée 223, de manière, par exemple, à la rendre plus facilement différentiable d'une icône associée à une autre fonction de test non illustrée sur la figure 2.

L'utilisateur, en sélectionnant la fonction de test référencée 222 (qui apparaît alors encadrée sur la figure 2), entraîne l'affichage sur l'écran du testeur portatif de l'ensemble 23 des paramètres de fonction de test associés, ainsi que de leurs valeurs. Par exemple, l'attribut de valeur du paramètre 231, dont l'attribut d'étiquette est "Called address", a pour valeur 0299847040, et l'attribut de valeur du paramètre 235, dont l'attribut d'étiquette est "Duration", a pour valeur 15min.

La valeur des attributs de présentation des paramètres de fonction 231 à 236 peut être modifiée au cours d'une étape de configuration, selon une technique similaire à celle décrite précédemment pour les applications 21 et pour les fonctions de test 22.

En outre, on peut également, avant la mise en service du testeur, modifier la valeur de l'attribut de valeur d'un des paramètres 231 à 236. On peut ainsi choisir de fixer la valeur du paramètre référencé 235 à 20min, de manière à ce que la durée du test entrepris soit égale à vingt minutes. On peut également modifier la valeur de l'attribut de verrouillage du paramètre 235, de manière à ce que l'utilisateur ne puisse pas modifier la valeur de l'attribut de valeur du paramètre 235, et soit donc toujours contraint de mettre en oeuvre la fonction de test 222 pendant une durée égale à vingt minutes. On peut cependant préférer de présenter l'attribut d'étiquette du paramètre 235 au sein de l'interface usager, de manière à ce que, bien que ne pouvant pas en modifier la valeur, l'utilisateur sache que la durée du test effectué est de vingt minutes.

On présente désormais, en relation avec la figure 3, un exemple de mode de réalisation d'une étape de configuration 32 d'une interface usager, par exemple pour un testeur portatif pour réseaux RNIS.

La figure 3 illustre l'écran 30 du testeur avant la mise en oeuvre d'une étape de configuration 32 de l'interface usager, et l'écran 31 du testeur après la mise en oeuvre d'une telle étape 32. On choisit, au cours de l'étape de configuration 32 précédant la mise en service de l'instrument de test, de masquer les paramètres de fonction de test référencés 301 à 304. Ainsi, les attributs d'étiquette des paramètres référencés 301 à 304 n'apparaissent plus sur l'écran 31 après l'étape de configuration 32, de façon, par exemple, à simplifier l'interface usager.

On choisit également, au cours de l'étape de configuration 32, de verrouiller la valeur de l'attribut de valeur des paramètres référencés 305 et 306, de manière à empêcher un utilisateur du testeur de la modifier en cours d'utilisation. On peut envisager, par exemple, que l'attribut d'étiquette et l'attribut de valeur des paramètres verrouillés 305 et 306 apparaissent en couleur, ou soulignés sur l'écran 31, de manière à indiquer à l'utilisateur qu'il ne peut pas modifier la valeur de l'attribut de valeur de ces paramètres.

Les figures 4a à 4c illustrent différents types de terminaux pouvant être mis en oeuvre au cours des étapes de configuration ou des étapes de transfert selon l'invention, à savoir un instrument de test et un terminal adapté, par exemple un testeur portatif pour réseaux RNIS 2 et un ordinateur personnel 1.

La figure 4a présente le cas où une étape de configuration est mise en oeuvre sur un ordinateur 1, et où la configuration créée au cours de cette étape est transférée 40 vers un testeur 2. Par exemple, la configuration est ensuite sauvegardée, dans un fichier de configuration, dans la mémoire RAMflash (mémoire non volatile) du testeur 2. Un telle mémoire permet de conserver la configuration de l'interface usager (c'est-à-dire les valeurs des différents attributs de présentation et de valeur des objets de test proposés par l'instrument de test) lorsque le testeur 2 est éteint.

On peut envisager de mettre en oeuvre plusieurs étapes de configuration sur l'ordinateur 1, de manière à générer plusieurs configurations, puis à les transférer 40 vers le testeur 2, où elles sont ensuite stockées. Ainsi, en fonctionnement, l'utilisateur peut choisir, parmi l'ensemble des fichiers de configuration stockés, un fichier de configuration courante du testeur 2.

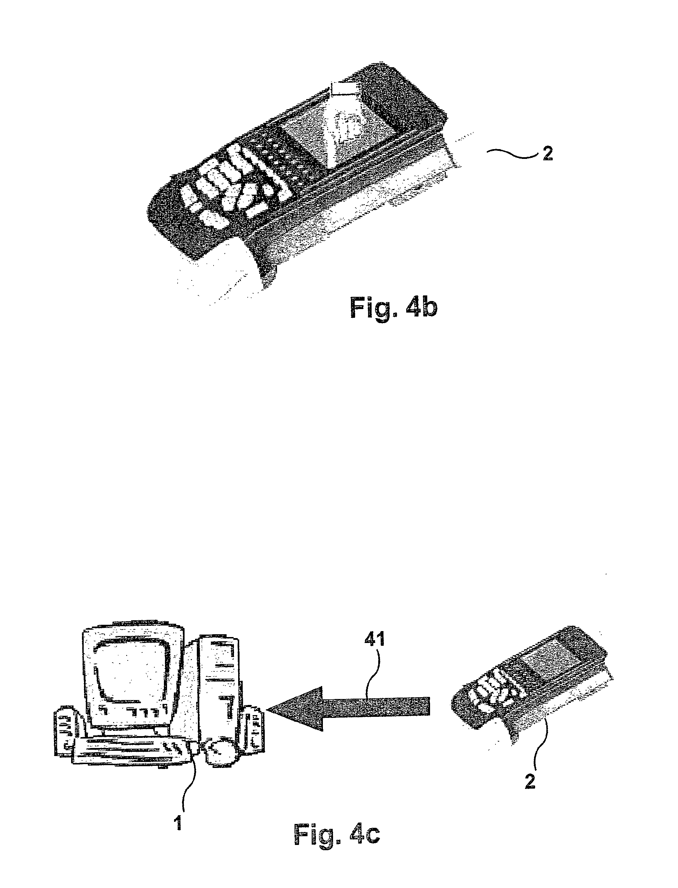

La figure 4b illustre le cas où l'étape de configuration de l'interface usager est directement mise en oeuvre sur le testeur 2, sans étape de transfert.

La figure 4c présente un exemple de mode de réalisation, où une étape de configuration de l'interface usager est mise en oeuvre sur le testeur 2, et où la configuration, générée au cours de cette étape, est transférée 41 vers un ordinateur 1. On peut, par exemple, enchaîner les cas illustrés par les figures 4c et 4a, c'est-à-dire mettre en oeuvre une étape de configuration sur un testeur 2, transférer 41 la configuration, ainsi générée, vers un ordinateur 1, puis transférer à nouveau 40 la configuration vers un autre testeur 2, de manière à ce que les utilisateurs des deux testeurs 2 aient accès à des fichiers de configuration similaires.

## Revendications

1. Procédé d'optimisation d'une interface usager d'un instrument de test (2), mettant en oeuvre un ensemble d'objets de test (21, 22, 23), présentant chacun au moins un attribut, ladite interface usager permettant d'accéder à au moins certains desdits objets de test,
**caractérisé en ce qu'**il comprend, avant la mise en service dudit instrument de test, au moins une étape de configuration (32), consistant à modifier la valeur d'au moins un attribut de présentation d'au moins un objet de test, en fonction d'au moins un critère technique prédéterminé,
de façon à définir une configuration donnée de ladite interface usager.

2. Procédé selon la revendication 1, **caractérisé en ce que** ledit procédé comprend, à l'issue de ladite au moins une étape de configuration, une étape supplémentaire de stockage de chaque configuration donnée dans un fichier de configuration distinct,
et **en ce qu'**on accède sélectivement à l'un desdits au moins un fichier de configuration, avant ladite mise en service dudit instrument de test (2).

3. Procédé selon l'une quelconque des revendications 1 et 2, **caractérisé en ce que** ladite au moins une étape de configuration (32) est effectuée dans ledit instrument de test (2).

4. Procédé selon la revendication 3, **caractérisé en ce que** ladite au moins une étape de stockage est effectuée dans ledit instrument de test (2).

5. Procédé selon la revendication 3, **caractérisé en ce qu'**il comprend, en outre, une étape de transfert (41) de ladite au moins une configuration, dudit instrument de test (2) vers un terminal prédéterminé (1),
et **en ce que** ladite au moins une étape de stockage est effectuée dans ledit instrument de test et/ou dans ledit terminal prédéterminé.

6. Procédé selon l'une quelconque des revendications 1 et 2, **caractérisé en ce que** ladite au moins une étape de configuration (32) est effectuée dans un terminal prédéterminé (1),
**en ce que** ledit procédé comprend, en outre, une étape de transfert (40) de ladite au moins une configuration, dudit terminal prédéterminé vers ledit instrument de test, et **en ce que** ladite au moins une étape de stockage est effectuée dans ledit instrument de test et/ou dans ledit terminal prédéterminé.

7. Procédé selon l'une quelconque des revendications 1 à 6, **caractérisé en ce que** ladite étape de configuration (32) permet, pour au moins un objet de test (21, 22, 23), de modifier la valeur d'un premier attribut de présentation, appelé attribut d'étiquette, permettant d'identifier ledit au moins un objet de test au sein de ladite interface usager.

8. Procédé selon la revendication 7, **caractérisé en ce que** ladite étape de configuration permet, pour au moins un objet de test, de modifier la valeur d'un deuxième attribut de présentation, appelé attribut de masquage, pouvant prendre une première valeur « présenté » ou une seconde valeur « masqué », permettant respectivement de sélectionner la présentation ou le masquage dudit attribut d'étiquette au sein de ladite interface usager.

9. Procédé selon la revendication 8, **caractérisé en ce que** ladite étape de configuration permet, pour au moins un objet de test, de modifier la valeur d'un troisième attribut de présentation, appelé attribut de position, permettant de sélectionner la position de présentation dudit attribut d'étiquette au sein de ladite interface usager, si ledit attribut de masquage a ladite première valeur « présenté ».

10. Procédé selon l'une quelconque des revendications 1 à 9, **caractérisé en ce qu'**au moins certains desdits objets de test sont des applications de test (211, 212, 213, 214).

11. Procédé selon l'une quelconque des revendications 1 à 10, **caractérisé en ce qu'**au moins certains desdits objets de test sont des fonctions de test (221, 222, 223, 224).

12. Procédé selon l'une quelconque des revendications 1 à 11, **caractérisé en ce qu'**au moins certains desdits objets de test sont des paramètres de fonction de test (231, 232, 233, 234, 235, 236).

13. Procédé selon la revendication 12, **caractérisé en ce que**, pour un objet de test donné qui est un paramètre de fonction de test, ladite étape de configuration permet en outre de modifier la valeur d'un attribut de valeur.

14. Procédé selon l'une quelconque des revendications 12 et 13, **caractérisé en ce que** ladite étape de configuration permet en outre, pour au moins un objet de test donné qui est un paramètre de fonction de test, de modifier la valeur d'un quatrième attribut de présentation, appelé attribut de verrouillage, pouvant prendre un premier état "verrouillé", dans lequel la valeur d'un attribut de valeur est fixée, et un second état "non verrouillé", dans lequel la valeur d'un attribut de valeur est modifiable.

15. Procédé selon l'une quelconque des revendications 1 à 14, **caractérisé en ce que** ledit instrument de test est destiné à être utilisé pour tester des réseaux de transmission numériques.

16. Instrument de test (2), mettant en oeuvre un ensemble d'objets de test, présentant chacun au moins un attribut, une interface usager dudit instrument permettant d'accéder à au moins certains desdits objets de test,
**caractérisé en ce qu'**il comprend des moyens de configuration consistant à modifier, avant la mise en service dudit instrument de test, la valeur d'au moins un attribut de présentation d'au moins un objet de test, en fonction d'au moins un critère technique prédéterminé,
de façon à définir une configuration donnée de ladite interface usager.

17. Programme informatique **caractérisé en ce qu'**il comprend des séquences d'instructions adaptées à la mise en oeuvre d'un procédé d'optimisation d'une interface usager d'un instrument de test selon l'une quelconque des revendications 1 à 15, lorsque ledit programme est exécuté par au moins un micro-processeur.

18. Programme informatique enregistré sur un support utilisable dans un ordinateur et/ou un instrument de test, comprenant des instructions de code de programme lisibles par au moins un micro-processeur pour effectuer, avant la mise en service d'un instrument de test, au moins une étape de configuration, consistant à modifier la valeur d'au moins un attribut de présentation d'au moins un objet de test, en fonction d'au moins un critère technique prédéterminé, de façon à définir une configuration donnée d'une interface usager dudit instrument de test.
